# EUROPEAN PATENT APPLICATION

(11) **EP 2 720 410 A1**
(43) Date of publication of application: **16.04.2014**
(21) Application number: 12306229.1
(22) Date of filing: 09.10.2012
(51) Int. Cl.: H04L 12/28, H04L 12/46

(54) **System comprising a first and a second residential gateway interconnected via a broadband connection, and respective residential gateway**

(71) Applicant: Thomson Licensing, 92130 Issy-les-Moulineaux (FR)
(72) Inventor: Goemaere, Geert, 2900 Schoten (BE); van den Broeck, Roel, 2970 Schilde (BE); van de Poel, Dirk, 2630 AARTSELAAR (BE)
(74) Representative: Arnold, Klaus-Peter

(57) **Abstract**

The system comprises a first (1) and a second (2) residential gateway coupled via a broadband connection with a service provider network (10) providing Internet services, wherein the first and the second residential gateway are adapted to connect among each other via a secured network tunnel (10). The secured network tunnel is advantageously an encrypted layer 2 Ethernet tunnel. In a preferred embodiment, the first residential gateway includes a first Ethernet bridge (3) with a first endpoint (11) and the second residential gateway includes a second Ethernet bridge (4) with a second endpoint (12), wherein the first and the second endpoints are interconnected via the encrypted layer 2 Ethernet tunnel.

## Description

### TECHNICAL FIELD

The invention relates to the field of residential gateways coupled via a broadband connection with a service provider network for providing Internet services to end-users of home networks.

### BACKGROUND OF THE INVENTION

Residential gateways are widely used to connect devices in a home of a customer to the Internet or any other wide area network (WAN). Residential gateways use in particular digital subscriber line (DSL) technology that enables a high data rate transmission over copper lines, or optical fiber broadband transmission systems, for example fiber-to-the-home (FTTH) and fiber-to-the premises (FTTP).

Home networks have become part of everyday life for many end users. A home network consists of a range of heterogeneous components which means that the home network is made up of different kinds of devices. All these devices need to communicate with each other. For this interconnection, multiple solutions are available. The home network uses a mixture of solutions, such as wireless and wired network connections. Combining these devices creates a network that allows users to share information and control devices in the home. Examples of networked devices in the home are residential gateways, set top boxes, TVs, personal computers, tablet, smart phones, network-attached storage (NAS) devices, printers and game consoles.

These devices use heterogeneous methods of connectivity to interconnect, which demands for zero-configuration networking and automatic discovery of computers, devices and services. Multiple technologies exist to make device and service discovery seamless. Example of these technologies is Universal Plug and Play (UPnP), Apple's Bonjour and Microsoft's CIFS.

More and more users want to access the services and devices in their home network when they are residing outside the home, e.g. at work, in a hotel, at the airport and when visiting friends. They like to share for example content, e.g. music, video, documents, also with other users, and to monitor devices, e.g. receiving data from a smart meter, and to control devices, e.g. turn off lights with a home automation system, in their home network.

Users want to connect also to their home network to access devices and services transparently from a remote network. To do so, a user faces many technical limitations which prevent transparent access to the heterogeneous technologies providing information and device control:
● Device and Service discovery is typically limited to a single Ethernet broadcast domain within the home network, thereby limiting information sharing to a bridged home network.
● When remote access from the Internet to the home is set up over a routed network, broadcast or multicast device and service discovery messages are not transferred between the home network and the remote network where the user resides.
● Commercial solutions exist to proxy certain protocols, e.g. UPnP, over routed networks. This requires installation of software both in the home network and on the devices of the visiting network. These solutions are limited to a single technology. This requires reimplementation of a solution for every other type of technology.
● When information is to be shared between two remote networks, e.g. two home networks, integrity and confidentiality of shared information is to be guarded. Traffic going over an untrusted network like the Internet is not encrypted by default.
● When a user connects from within a remote network to the home network, the user must provide identity credentials which allows him to be authenticated and authorized to connect the remote network to the home network. Such requirements are typically not met in home networks.

US 6,993,037 discloses a system and a method for virtual private network (VPN) network address translation propagation over nested connections with coincident local endpoints. The system is adapted for operating a first node in a network including at least one second node and comprises an inner connection, an outer connection, and a local coincident endpoint for the outer connection and the inner connection. The method extends VPN network address translation to include support for nested connections with coincident endpoints, without requiring any special configuration for the inner VPN connection.

WO 2008/090519 discloses a method including setting up a first secure transport tunnel between a remote access client and a remote access relay of an Internet service provider network, setting up a second secure transport channel tunnel between the remote access relay and a remote access server of a home network, and updating the remote access client with related parameters and settings on the remote access relay.

### SUMMARY OF THE INVENTION

The system comprises a first and a second residential gateway coupled via a broadband connection with a service provider network providing Internet services, wherein the first and the second residential gateways are adapted to connect among each other via a secured network tunnel. In a preferred embodiment, the first residential gateway includes a first Ethernet bridge with a first endpoint and the second residential gateway includes a second Ethernet bridge with a second endpoint, wherein the first and the second endpoints are interconnected via the secured network tunnel. The secured network tunnel is advantageously an encrypted layer 2 Ethernet tunnel.

In a further aspect of the invention, a network protocol used for communicating between the first and second residential gateway is an Internet Version 6 protocol. Each Ethernet bridge includes in particular a bridge filter to prevent DHCPv6 messages to be tunneled between both residential gateways, to prevent IPv6 Router advertisements to be tunneled between both residential gateways, and/or to prevent IPv4 packets to be tunneled between both residential gateways.

In another aspect of the invention, the service provider network is the network service provider network, which configures the secured network tunnel on a request of a user of the first or the second residential gateway. For an interconnection of the first and the second residential gateways via the secured network tunnel, in particular a user account on a portal of the service provider network is required for both residential gateways.

A residential gateway for the system comprising a first and a second residential gateway coupled via a broadband connection with a service provider network providing Internet services, wherein first and the second residential gateway are adapted to connect among each other via a secured network tunnel, comprises advantageously an Ethernet bridge with an endpoint for connecting the residential gateway via the secured network tunnel with a second residential gateway.

### BRIEF DESCRIPTION OF THE DRAWINGS

Preferred embodiments of the invention are explained in more detail below by way of example with reference to schematic drawings, which show:
- Fig. 1: a system including two residential gateways for providing transparent bridging between two home networks,
- Fig. 2: a method to set up a user account on a portal of a service provider network, and
- Fig. 3: a method to set up a secured network tunnel for a system in accordance with Fig. 1.

### DETAILED DESCRIPTION OF PREFERRED EMBODIMENTS

In the following description, a system comprising a first and a second residential gateway coupled via a broadband connection with a service provider network is described. For purposes of explanation, numerous specific details are set forth in order to provide a thorough understanding of preferred embodiments. It will be evident, however, to one skilled in the art that the present invention may be practiced without these specific details.

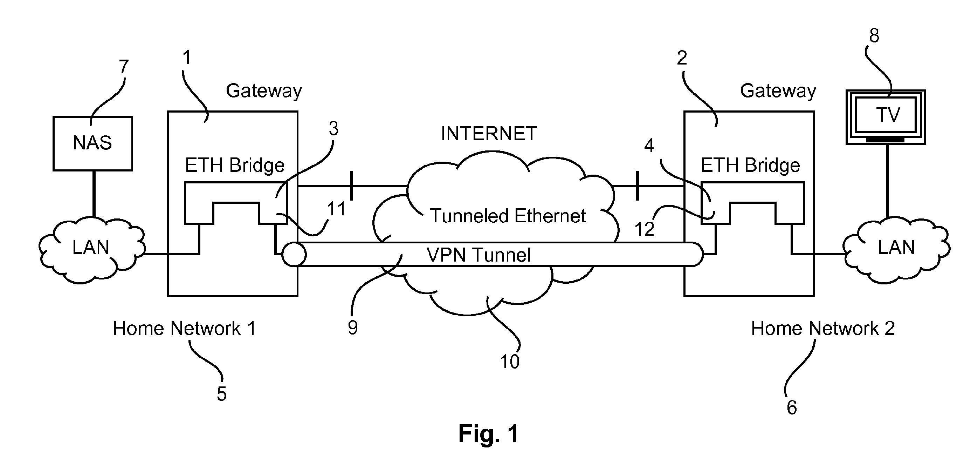

The system according to the invention includes in a preferred embodiment a first residential gateway 1 comprising an Ethernet bridge 3 and a second residential gateway 2 comprising an Ethernet bridge 4, which are coupled via a broadband connection with a service provider network 10 providing Internet services, as shown in Fig. 1. The first residential gateway 1 is a part of a first home network 5 of a first user A and the second residential gateway 2 is a part of a second home network 6 of a second user B. The service provider network 10 is in particular the network service provider (NSP) network.

A residential gateway of this kind, as used for home networks, includes typically a microprocessor, a nonvolatile memory, in which an operating system with software modules and applications is stored, and a volatile memory for the operation of the residential gateway. The operating system of the residential gateway is for example a LINUX operating system and a gateway-specific middleware, which represents an execution environment for the applications. The software modules provide in particular a DSL modem function, a cable or an optical modem function, gateway and switching functions, FXS functions, VoIP functionality, and include a Wi-Fi node for a wireless operation and an Ethernet bridge. An Ethernet bridge, also known as a MAC 802.1D bridge, is a bridge defined by an IEEE 802.1D standard to interconnect IEEE 802 Standard Local Area Networks (LANS). Via the Wi-Fi node and the Ethernet bridge, a multitude of end-user devices can be integrated within a home network and has access to the Internet via the residential gateway.

The Ethernet bridge 3 includes a first endpoint 11, which is connected by a network tunnel 9 with a second endpoint 12 of the Ethernet bridge 4, to provide transparent bridging between the two home networks 5, 6. The network tunnel is advantageously an encrypted layer 2 Ethernet tunnel and therefore a secured virtual private network (VPN) tunnel. The two residential gateways 1, 2 are hence interconnected as a layer 2 bridge by setting up the encrypted layer 2 Ethernet tunnel 9 between the two residential gateways 1, 2. By bridging the tunnel endpoints 11, 12 via the service provider network 10, a seamless communication between all devices and services of both home networks 5, 6 is enabled in a secure way.

In the embodiment shown in figure 1, the home network 5 includes a network attached storage (NAS) device 7, coupled to the Ethernet bridge 3 of the residential gateway 1, and the home network 6 includes a television set 8 coupled to the Ethernet bridge 4 of the residential gateway 2.

As a network protocol for bridging the two home networks 5, 6, advantageously the Internet Protocol version 6 (IPv6) is used, which provides the following advantages:
■ IPv6 avoids overlapping address spaces, as would be the case with IPv4.
■ Each residential gateway has a router advertisement function.
■ The global prefixes of the remote residential gateway are advertised locally with an L-bit set to indicate that remote prefixes are reachable locally via the bridged tunnel. The A-bit is cleared to avoid local hosts configuring an address from the remote prefix.
■ For each global prefix of the remote residential gateway, a prefix route is injected to the devices of the local network so that traffic to the remote residential gateway is redirected to the tunnel.

In a preferred embodiment, bridge filters at both Ethernet bridges 3, 4 are applied to prevent IPv6 router advertisements to be tunneled between both residential gateways, to prevent DHCPv6 messages to be tunneled between both residential gateways, and to prevent IPv4 packets to be tunneled between both residential gateways.

For bridging both residential gateways 1, 2 via the secured network tunnel 9, it is necessary that both users create a user account on a portal of the service provider network 10, for example the NSP network.

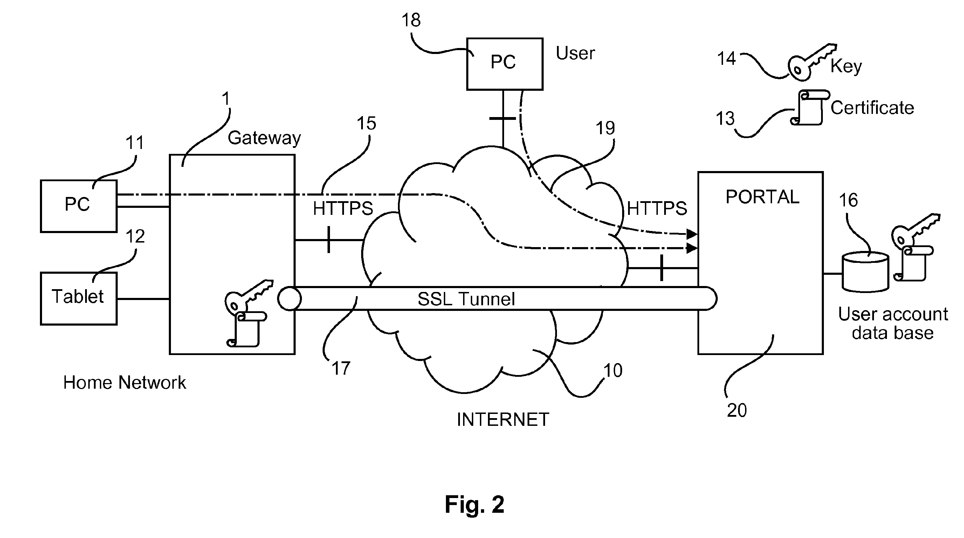

A method to create a user account 16 on a portal 20 of the service provider network 10 is described now with regard to Fig. 2: the user A uses a laptop 11, or a tablet-PC 12, of his home network 5 to connect the laptop 11 via the residential gateway 1 with the portal 20 of the service provider network 10 by using the Hypertext Transfer Protocol (HTTP). The communication with the portal 20 is then provided for example by using a secure HTTP connection 15 using asymmetric key encryption 14 and a digital certificate 13.

Via the secured connection 15, the PC 11 is connected to the portal 20 via its residential gateway 1 so that the user A can provide all necessary information for creating the user account 16 in a secure way, for example user name, password, gateway identification, e.g. serial number, common name and/or certificate of the residential gateway 1, IP address of the residential gateway 1, e-mail address and/or mobile phone number of the user A, billing information, etc. Alternatively, the user A may connect to the portal 20 from outside of his home network 5 to create the user account 16, by using a PC 18 to connect to the service provider network 10. After the connection, a secured HTTPS connection 19 is set up between the service provider network 10 and the PC 18 so that the user A can input all necessary information for creating the user account 16 in a secure way.

The user account 16 is stored for example in a database of the portal 20. With the user account 16, the service provider of the service provider network 10 is also enabled to provide various services for the user A, for example self-care and gateway management, and billing. The second user B can create a user account 16 on the portal 20 of the service provider network 10 in the same manner. When the users A and B have created a user account 16 on the portal 20, then the portal 20 can setup a secured SSL tunnel with the residential gateway 1 of user A or with the residential gateway 2 of user B.

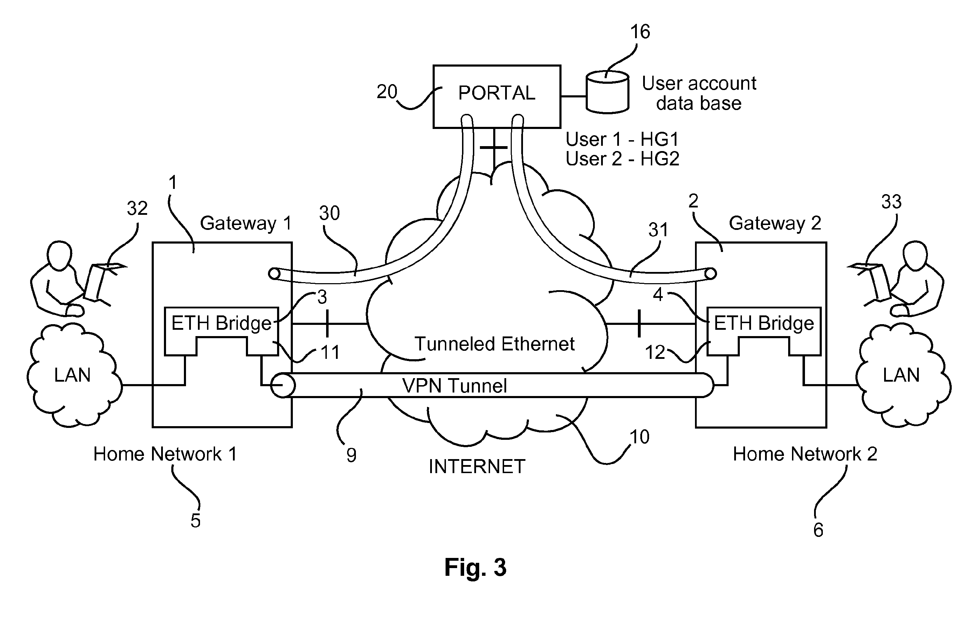

Interconnecting the residential gateway 1 with the residential gateway 2 via a secured network tunnel 9 is now explained with regard to Fig. 3. The users A and B have both a user account 16 on the portal 20 for their home network 5, respectively home network 6. Both users have accepted that they can interconnect to each other's home network and this decision is stored in the user account data base of the portal 20.

The user A for example wants to connect now his home network 5 with the home network 6 of the user B. He sends therefore a request to the portal 20, for example by sending an e-mail with his PC 32 to the portal 20, to interconnect his home network 5 with the home network 6 of the user B. In a further step, the portal 20 checks the user accounts of both users A, B, and when the user accounts include all necessary information, then the portal 20 sets up a secure SSL connection 30 to the residential gateway 1 and a secure SSL connection 31 to the residential gateway 2.

Via the connection 30, the portal 20 configures the residential gateway 1 and via the connection 31 the portal 20 configures the residential gateway 2, so that the endpoint 11 of the Ethernet bridge 3 is interconnected via the secured network tunnel 9 with the endpoint 12 of the Ethernet bridge 4. After the setup of the residential gateways 1, 2, both home networks 5, 6 are seamlessly interconnected to share information between the home networks 5 and 6.

For example, the user A wants to share his latest holiday photos with the user B. The user A therefore sends a request to the portal 20 to setup a secured network tunnel 9 between his residential gateway 1 and the residential gateway 2 of user B. The photos of the user A are for example on the network attached storage device 7, Fig. 1. The portal 20 informs the user B via email or SMS that the user A wants to interconnect the residential gateways 1, 2 to activate home-to-home networking. The user B knows the user A and accepts the request of entry of the user A, to interconnect both residential gateways 1, 2. The user B then clicks on a link embedded in the email or SMS, which redirects his browser of his PC 33, Fig. 3, to the portal 20 home-to-home web-service, and the user B logs in to the portal 20 by using is user name and password and accepts the request of the user A for the duration of e.g. 2 hours.

The setup of the secured network tunnel 9 between the residential gateways 1, 2 is then established as described above. The television set 8 of the user B for example is DLNA capable, also the storage device 7, Fig. 1, so that the television set 8 discovers the storage device 7 of the home network 5 and the photos stored on the storage device 7 therefore can be displayed on the television set 8 for the user B. After 2 hours, or on a request by one of the users A or B, the portal 20 tears down the interconnectivity between both home networks 5, 6 by disconnecting the residential gateways 1, 2.

The invention allows therefore an easy configuration of two residential gateways for a secure home-to-home interconnectivity. All connectivity problems are solved at the network level. The users A, B can keep control of the services and contents. Also less experienced users can set up easily a connection between two the residential gateways of their home networks for a time-limited session. The network service provider can offer respective web services for home-to-home interconnectivity to attract customers.

Also other embodiments of the invention may be utilized by one skilled in the art without departing from the scope of the present invention. The invention is in particular not limited to wide area networks using xDSL transmissions and is applicable also to any other wired or wireless broadband technology, for example TV distribution cable or optical transmission. The invention resides therefore in the claims herein after appended.

## Claims

1. System comprising a first and a second residential gateway (1, 2) coupled via a broadband connection with a service provider network (10) providing Internet services, **characterized in that**
the first and the second residential gateways (1, 2) are adapted to connect among each other via a secured network tunnel (9).

2. System according to claim 1, wherein the secured network tunnel (9) is an encrypted layer 2 Ethernet tunnel.

3. System according to claim 2, wherein the first residential gateway (1) includes a first Ethernet bridge (3) with a first endpoint (11) and the second residential gateway (2) includes a second Ethernet bridge (4) with a second endpoint (12), and wherein the first and the second endpoints are interconnected via the layer 2 Ethernet tunnel (9).

4. System according to claim 1, 2 or 3, wherein a network protocol used for communicating between the first and second residential gateways (1, 2) is an Internet Version 6 protocol.

5. System according to claim 4, wherein each Ethernet bridge (3, 4) includes a bridge filter to prevent DHCPv6 messages to be tunneled between both residential gateways, to prevent IPv6 Router advertisements to be tunneled between both residential gateways, and/or to prevent IPv4 packets to be tunneled between both residential gateways.

6. System according to one of the preceding claims,
wherein the service provider network (10) is the network service provider network, which configures the secured network tunnel (9) on a request of a user of the first or the second residential gateway (1, 2).

7. System according to one of the preceding claims,
wherein for an interconnection of the first and the second residential gateways (1, 2) via the secured network tunnel (9), a user account (16) on a portal (20) of the service provider network (9) is required for both residential gateways (1, 2).

8. Residential gateway (1) for a system according to one of the preceding claims.

9. The residential gateway of claim 8, comprising an Ethernet bridge (3) with an endpoint (11) for connecting the residential gateway via the secured network tunnel with a second residential gateway (2).
